Europäisches Patentamt

European Patent Office

Office européen des brevets

(11) Publication number: **0 360 546**
A2

# EUROPEAN PATENT APPLICATION

(21) Application number: 89309480.5

(22) Date of filing: 19.09.89

(51) Int. Cl.5 **H02K 1/17 , H02K 23/04 , H02K 5/15**

(30) Priority: 21.09.88 GB 8822196

(43) Date of publication of application:
28.03.90 Bulletin 90/13

(84) Designated Contracting States:
DE ES FR GB IT

(71) Applicant: LUCAS INDUSTRIES public limited
company
Great King Street
Birmingham, B19 2XF West Midlands(GB)

(72) Inventor: West, John Godfrey Wilson
The Old Post Office Mill Lane Elmley Castle
Nr. Pershore Worcs. WR10 3HP(GB)

(74) Representative: Carpenter, David et al
MARKS & CLERK Alpha Tower Suffolk Street
Queensway
Birmingham B1 1TT(GB)

(54) Permanent magnet field electric motor.

(57) A permanent magnet field electric motor comprising non-magnetic bearing housing means (22, 23) rotatably supporting an elongate rotor shaft (13) for rotation about its longitudinal axis, a wound armature (14) carried by said rotor shaft (13) for rotation therewith, and a plurality of arcuate permanent magnet poles (24) circumferentially spaced around said armature, said bearing housing means (22, 23) having radially outwardly presented register means (25, 26) engaging radially inwardly presented surfaces of the permanent magnet poles (24) to locate the poles (24) radially relative to the axis of rotation of the armature (14), said housing means supporting said poles in predetermined circumferential and radial positions relative to said armature, and said housing means further supporting and locating an equal number plurality of yoke segments (29) at the exterior of said poles, said yoke segments (29) respectively magnetically interconnecting circumferentially adjacent poles 24.

FIG.2

EP 0 360 546 A2

EP 0 360 546 A2

## PERMANENT MAGNET FIELD ELECTRIC MOTOR

This invention relates to an electric motor having a wound armature and a permanent magnet field system.

In a conventional permanent magnet field electric motor a plurality of arcuate permanent magnet poles are equi-angularly spaced around the interior of a cylindrical yoke to which the poles are secured. Mounted for rotation about an axis coincident with the axis of the cylindrical yoke is a rotor shaft, the rotor shaft supporting, within the volume bounded by the poles, a wound armature. The rotor shaft carries a commutator which rotates with the armature and which is engaged by stationary brushes through which current is supplied to the armature windings. An air gap is present between the outer periphery of the cylindrical armature and the inner, cylindrical, peripheral surface of the arcuate permanent magnet poles. In addition to providing a support for the poles the yoke effects a magnetic interconnection between circumferentially adjacent poles and in most conventional machines the yoke is a complete cylinder formed from a ferro-magnetic material such as mild steel. However, British patent 1342728 shows a permanent magnet field electric motor wherein the yoke is divided along the centre lines of the permanent magnet poles With a view to minimising the effect of armature reaction, and thus reducing the demagnetising effect which armature reaction produces on the permanent magnets.

British Patent Application 2141292A discloses an electric motor construction in which the bearing housings are extended axially to cooperate with permanent magnet poles of the motor. The housing extensions are flexed so as to urge the poles radially outwardly into engagement with the inner surface of a tubular yoke which thus supports and locates the permanent magnet poles in a radial direction.

It is an object of the present invention to provide a permanent magnet field electric motor wherein the amount of permanent magnet material, and more particularly the cost of the permanent magnet material, is reduced by comparison with a conventional motor without loss of power output for a given electrical current input.

In accordance with the present invention there is provided a permanent magnet field electric motor comprising non-magnetic bearing housing means rotatably supporting an elongate rotor shaft for rotation about its longitudinal axis, a wound armature carried by said rotor shaft for rotation therewith, and a plurality of arcuate permanent magnet poles circumferentially spaced around said armature, said bearing housing means having radially outwardly presented register means engaging radially inwardly presented surfaces of the permanent magnet poles to locate the poles radially relative to the axis of rotation of the armature, said housing means supporting said poles in predetermined circumferential and radial positions relative to said armature, and said housing means further supporting and locating an equal number plurality of yoke segments at the exterior of said poles, said yoke segments respectively magnetically interconnecting circumferentially adjacent poles.

Preferably said radial location of said poles by said housing means is effected at least at the axial ends of the poles.

Desirably the housing means includes axial extensions in the interpolar spaces providing circumferential location of the poles.

Conveniently said axial extensions additionally provide radial location.

Conveniently at least part of said housing means is cast or moulded with said poles in situ.

Desirably said at least part of said housing means is cast or moulded also with said yoke segments in situ.

Preferably said housing means includes two separately formed bearing housings each of which cooperates with a respective axial end of said poles and yoke segments.

Desirably said housings each directly engage and radially locate a respective axial end of said poles and said yoke segments.

Alternatively one of said housings cooperates with the respective axial end of the poles and yoke segments by way of a non-magnetic spacer sleeve, the sleeve providing radial location of the end of the poles and yoke segments and being itself radially located by engagement with the respective housing.

Conveniently the permanent magnet material of the poles is a ferrite material.

Preferably the permanent magnet material of the poles is a Rare Earth-Iron material.

The term "Rare Earth-Iron" is used herein to indicate materials based upon a Rare Earth and Iron and includes for example materials comprising Neodymium and Iron, and Neodymium, Iron, and Boron.

Conveniently the Rare Earth-Iron poles are integral parts of a cylindrical sleeve of Rare Earth-Iron permanent magnet material, the sleeve being magnetised only in those regions which are to define the poles, the intervening regions being left in an unmagnetised state, and the ends of the sleeve each having a

2

radially inwardly presented surface engaged with radially outwardly presented register means on said housing means to locate the poles radially with respect to the armature axis.

Preferably where Rare Earth-Iron magnets are utilized, the radial dimension of the air gap between the armature and the yoke material in the interpolar regions exceeds the sum of the armature to pole air gap and the pole thickness.

In the accompanying drawings:

Figure 1 is a transverse sectional view of a permanent magnet field electric motor in accordance with a first example of the present invention,

Figure 2 is a composite longitudinal sectional view of the motor shown in Figure 1, the composite section being indicated in Figure 1 by the line A-B,

Figure 3 is a view similar to Figure 2 of a modification,

Figure 4 is a view similar to Figure 1 illustrating an alternative position for the through bolts,

Figure 5 is a view similar to Figure 2 of a motor in accordance with a second example of the present invention,

Figure 6 is part of a transverse cross-sectional view of a motor in accordance with a third example of the invention,

Figure 7 is a cross-sectional view on the line x-x in Figure 6,

Figure 8 is a view similar to Figure 6 of a modification, and,

Figure 9 is a transverse cross-sectional view of a motor in accordance with a fourth example of the present invention.

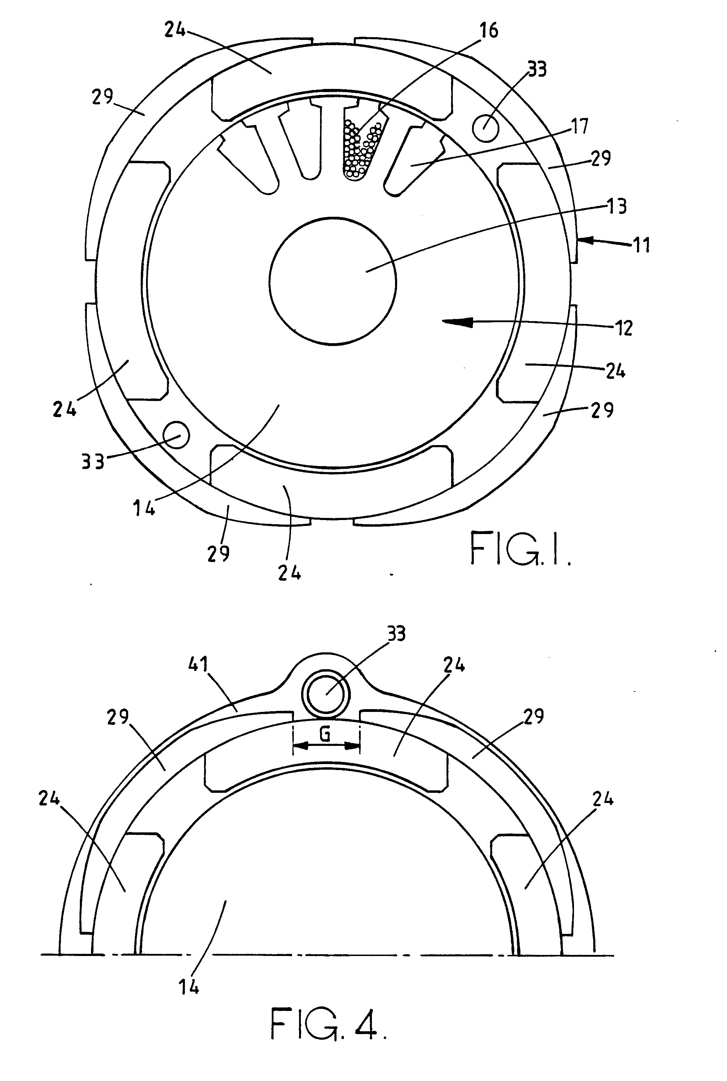

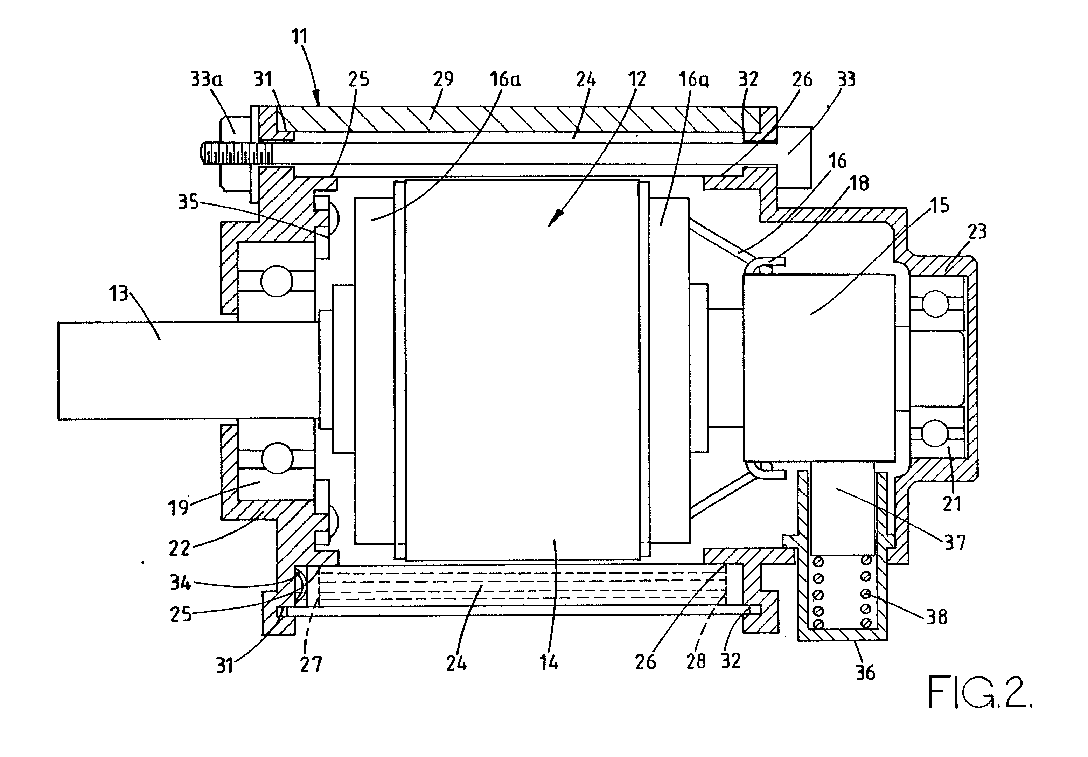

Referring first to Figures 1 and 2 of the accompanying drawings it can be seen that the electric motor includes a stator assembly 11 rotatably housing a rotor assembly 12. The rotor assembly 12 includes an elongate rotor shaft 13 carrying a wound armature 14 between its ends. Adjacent one end the rotor shaft 13 carries a commutator 15 to the segments of which are connected armature windings 16 extending from the slots 17 of the armature 14. Each commutator segment has an upstanding tang 18 to facilitate connection thereto of an armature winding or windings.

The outer end regions of the shaft 13 are supported for rotation by respective co-axially positioned ball or roller bearing assemblies 19, 21 carried by respective bearing housings 22, 23. The bearing housings 22, 23 are of non-magnetic material and conveniently are formed from a zinc alloy by a die-casting technique. It would of course be possible to produce the bearing housings in other materials, and by other techniques. For example it is possible that the bearing housings could be formed from a synthetic resin material, possibly a filled resin, by compression or injection, moulding techniques.

The outer surface of the armature core 14 is cylindrical having its axis coincident with the axis of rotation of the rotor shaft 13. Equi-angularly disposed around the armature core 14 are four elongate permanent magnet poles 24 which are arcuate in transverse cross-section. The inner peripheral faces of the four permanent magnet poles 24 define parts of a common imaginary cylinder having its axis coincident with the axis of rotation of the shaft 13.

The axial length of the permanent magnet poles 24 is such that the poles extend at both ends beyond the armature core and the winding overhangs 16a and engage the bearing housings 22, 23 respectively. The bearing housing 22 is formed with a surface or surfaces 25 positioned accurately with respect to the axis of the bearing 19 for radially locating the respective axial ends of the poles 24. The bearing housing 23 is similarly provided with location surfaces 26 for radially locating the opposite axial ends of the poles 24. It will be recognised that the location surfaces, (or internal registers) 25, 26 can be formed very accurately by virtue of the manufacturing technique used for the housings 22, 23. Additionally the housings 22, 23 have surfaces presented to the axial end surfaces of the poles and there are projections indicated in Figure 2 by the dotted lines 27, 28, on the bearing housings which engage notches in the end faces of the poles to locate the poles circumferentially relative to the bearing housings. The magnets 24 are conveniently formed from a ferrite permanent magnet material having high remanent flux density (typically 0.40 to 0.44 Tesla) and moderate to high coercivity (Intrinsic Coercivity typically 330 to 220 KA/M).

Disposed radially outwardly of the permanent magnet poles 24 are four arcuate yoke segments 29 formed from low carbon steel (conveniently mild steel) the segments 29 being portions cut to length from an extrusion, or being individually stamped from mild steel sheet and pressed to the required curvature. It can be seen that the yoke segments 29 are positioned to bridge the circumferential gaps between adjacent poles 24 and that the segments 29 do not touch one another, there being a circumferential gap between circumferentially adjacent segments 29, the gaps coinciding with the axial centre lines of the poles. It will be recognised that the yoke segments 29 are magnetically separate from one another. Furthermore it can be seen that the segments 29 taper in thickness from a maximum in their circumferential mid-regions to minimum at their circumferential end regions.

3

The segments 29 are secured in position relative to the poles 24 by engagement of their axial end regions with the bearing housings 22, 23. As is apparent from Figure 2 the housing 22, 23 are formed with location surfaces or registers 31, 32 respectively for radially positioning the segments 29. The housings also have surfaces which abut the axial end surfaces of the segments, and there will be projections on the bearing housings which mate with the segments to provide circumferential location of the segments 29 relative to the bearing housings, and more particularly relative to the poles 24.

The stator assembly 11 is secured together by a pair of through bolts 33 which, as is apparent from Figure 1, extend axially of the machine in the gap between respective pairs of poles 24. The through bolts 33 are positioned in respective gaps between poles so as to be diametrically opposite one another, the shank of each of the through bolts passing through bores in both bearing housings 22, 23 with the head of the bolt engaging the outer face of one of the bearing housings and a nut 33a in screw threaded engagement with the bolt and bearing against the outer face of the other of the bearing housings. The through bolts are tightened so as to clamp the yoke segments 29 between the bearing housings 22, 23, the axial lengths of the segments 29 being identical, and thus determining the spacing of the bearing housings 22, 23. Each permanent magnet pole 24 axially abuts the housing 23 directly, and a spring steel, or other resilient element 34 is positioned between the opposite end of each pole and the bearing housing 22 to ensure that each pole 24 is trapped between the housings 22, 23 and any slight variation in axial length between the poles is accommodated without any of the poles being subject to an excessive compression force as a result of the loading applied by the through bolts. The yoke segments 29 press the poles 24 radially inwardly to seat firmly on, and be radially located by, the internal registers 25, 26. If desired the bolts 33 can be arranged to generate flexure in the housings 22, 23 to stress the segments 29 radially inwardly against the poles 24.

If necessary one or more bearing retaining plates (as illustrated at 35 in relation to the bearing 19) can be secured to the bearing housings to cooperate with the bearings. Where used such plates will be of non-magnetic material. The bearing housing 22 is annular to permit the shaft 13 to protrude therefrom. By comparison the bearing housing 23 is deeper, so as to accommodate the commutator 15, and is closed since there is no need for the shaft 13 to protrude. Furthermore the bearing housing 23 supports brush assemblies 36 whereby two or more brushes 37 are urged by respective springs 38 into engagement with the cylindrical surface of the commutator 15 in known manner.

It will be recognised that the rotor assembly is supported by bearings carried by the bearing housings, and that the bearing housings also support and locate the permanent magnet poles. The bearing housings can be manufactured to a high degree of accuracy, and thus the internal registers whereby the positioning of the poles in relation to the bearing housings is achieved, can be produced with a high degree of accuracy both in relation to the diameter of the registers, and the concentricity of the registers in relation to the bearing axis. Thus the positioning of the permanent magnets by internal registers on the bearing housing permits positioning of the permanent magnets relative to the armature core with a high degree of accuracy, significantly greater than can be achieved by conventional techniques where the permanent magnet poles are supported by a yoke structure. Such accuracy in turn permits the radial air gap between the outer face of the armature core and the inner faces of the permanent magnets to be significantly reduced by comparison with conventional machines. For example, comparing a machine as described above, with a conventionally constructed machine of the same rating it is possible to substantially halve the air gap. The conventional machine would have a mean air gap of 1.0 to 1.2mm whereas a machine as constructed above could have mean air gap of 0.5 to 0.7mm.

The accuracy which can be achieved by the construction technique described above would permit the minimum air gap between the armature core and the permanent magnet poles to be of the order or 0.3 to 0.5mm. However, in order to minimise an effect known as "cogging" it may be necessary to chamfer the circumferential edges of the poles so as to increase the radial air gap at the points where the armature teeth enter, and exit from, beneath the poles. As an alternative to chamfering the edges, the inwardly presented faces of the poles may depart from the true cylindrical to provide a graded air gap adjacent the circumferential edges of the poles. Which ever technique is adopted to minimise cogging, the minimum air gap will be adjacent the centre line of each pole and the mean air gap is increased by comparison with the minimum so as to lie in the region 0.5 to 0.7mm. Chamfering, or graded air gap techniques are also necessary in conventional machines hence the reference to a mean air gap of 1.0 to 1.2mm.

It will be noted that the permanent magnet poles have an axial length which is upto twice that of the armature core 12. There is thus a large over-hang of the permanent magnets relative to the core, by comparison with a conventional machine. Although the increased overhang does not contribute greatly to the power output it does have a beneficial effect in this area provided that the bearing housings are of non-magnetic material. The effect is to increase the flux density in the radial air gap between the armature core and the permanent magnet poles and thus permits a reduction in size of the motor by comparison with a conventional machine of the same rating.

It will be recognised that it would be possible to dispense with the springs or other resilient inserts 34 by grinding the permanent magnet poles accurately to a predetermined axial length. However, the use of such resilient inserts is preferred since it minimises the risk of damage to the permanent magnet poles as a result of axial loadings in use.

The motor construction described with reference to Figures 1 and 2 is suitable for use in a clean environment, but where there is the possibility of attack by water, salt, oil or the like then it may be desired to seal the motor against ingress of such contaminants. There are a number of options in relation to sealing. The construction as illustrated in Figures 1 and 2 could be enclosed in a rubber or plastic sleeve which conforms closely to the outer periphery of the segments 29 and which at its ends is secured to, or tightly grips the bearing housings 22, 23. Alternatively the segments 29 and the outer diameter of the bearing housings could be enclosed in a thin aluminium tube shrunk in place either by magnetic forming, or by compression using, for example, an inflatable collar. A further possibility is the use of a heat shrinkable synthetic resin sleeve which is shrunk around the machine, so as to grip the segments 29 and the outer diameter of the bearing housings, the sleeve having an inner coating of a sealing compound which is thus pressed firmly onto the exterior of the motor. The application of an external cover shrunk or deformed onto the motor may provide a radial clamping force assisting the segments 29 in pressing the poles 24 onto the registers 25, 26.

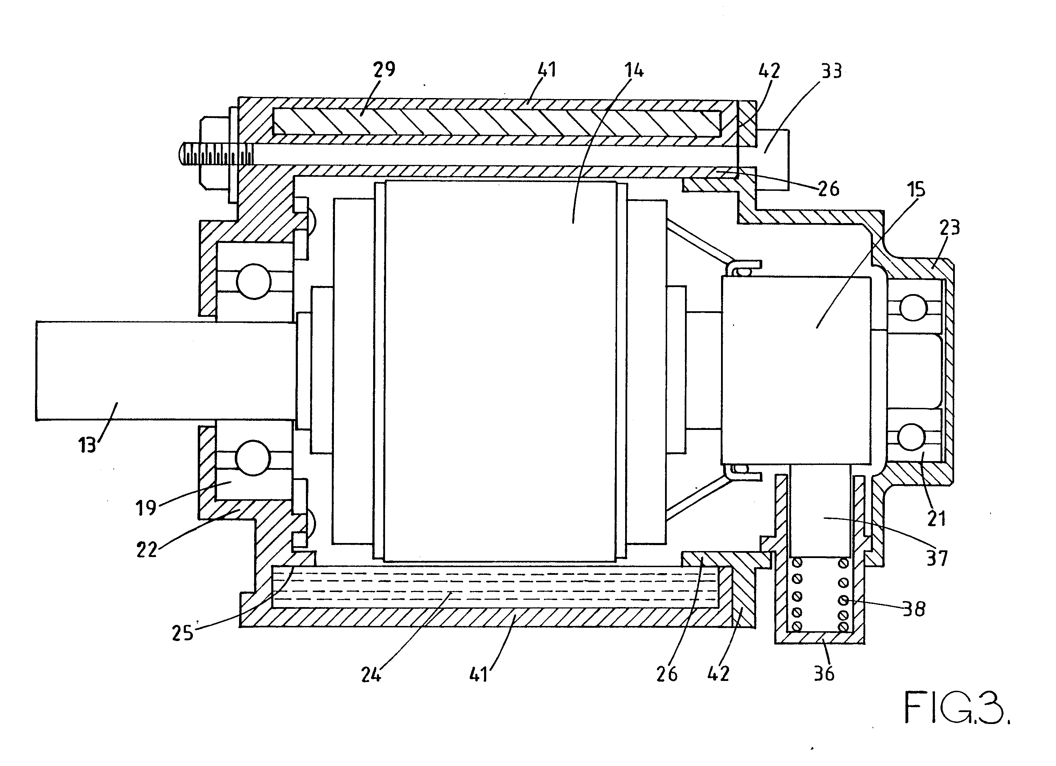

In a modification of the arrangement illustrated in Figures 1 and 2, one of the bearing housings 22, 23 includes an integral axial extension. Figure 3 illustrates such a modification in which the bearing housing 22 incorporates the integral extension. Parts common to the construction illustrated in Figure 2 are denoted in Figure 3 by the same reference numerals. The bearing housing 22 is cast with an integral axial extension 41 which, at its free end, abuts the bearing housings 23 at a radially extending surface 42. The yoke segments 29 are positioned within the extension 41 during casting of the bearing housings 22 by means of conventional "insert casting" techniques. The permanent magnet poles 24 are also preferably incorporated into the extension 41 by "insert casting" techniques, a damaging temperature rise of the permanent magnet poles being avoided by the use of a low temperature moulding compound or casting alloy for the housing 22 and extension 41. The internal registers 25, 26 of the bearing housings 22, 23 cooperate with the permanent magnet poles, and between the poles the registers 26 cooperate with the material of the integral extension 41 to ensure the accuracy of positioning of the permanent magnet poles in relation to the armature core 14 as described previously, and also to ensure accurate positioning of the housings 22, 23 relative to one another. Although Figure 3 illustrates the use of through bolts 33 it is to be understood that through bolts are not necessary unless they are used also to secure the motor to an external support structure. Since material of the extension 41 is present between the poles 24 then this material can be drilled and tapped at the free end of the extension 41 to receive short bolts securing the bearing housing 23 to the extension 41.

It will be recognised that both in the construction illustrated in Figures 1 and 2, and the construction illustrated in Figure 3 there may be advantages in minimising the circumferential extent of the registers 25, 26. The circumferential extent of the registers 16 is reduced to minimise the amount of metal presented to the armature, and thereby minimise eddy-current flow in the bearing housings generated by flux pulsations resulting from the passing of the armature teeth. However, the circumferential extent of the registers 25, 26 will be sufficient to ensure the necessary accuracy of pole positioning.

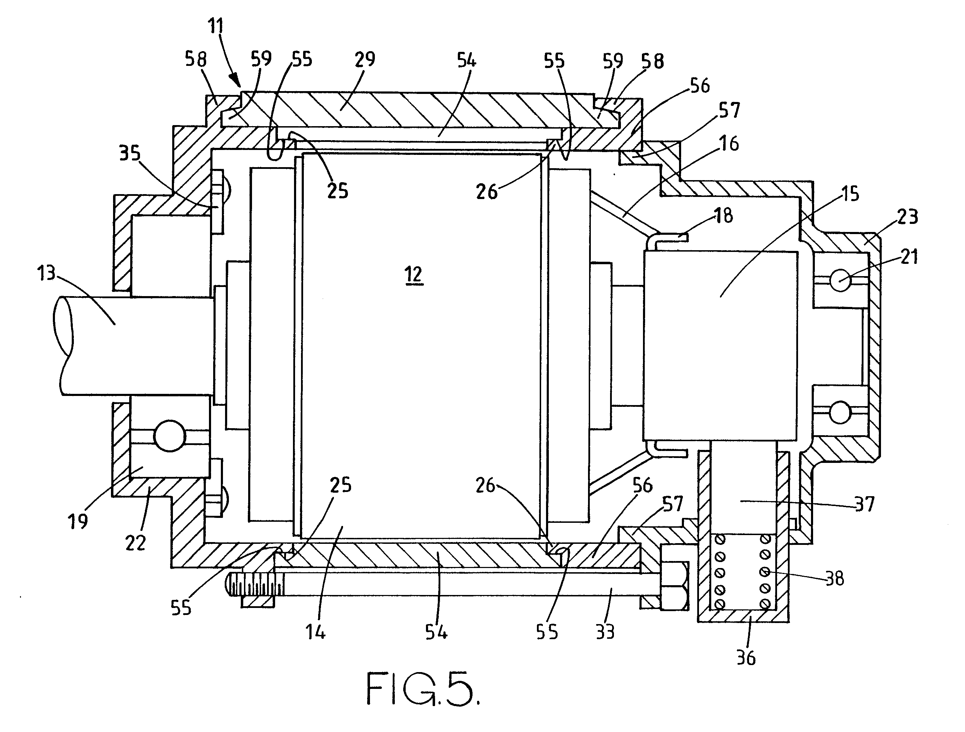

Figure 4 illustrates an arrangement similar to Figure 3 in that the yoke segments 29 are within a bearing housing extension 41 but wherein the through bolt 33, or an equivalent short securing bolt, is located radially outwardly from a permanent magnet pole 24 rather than being in a gap between adjacent poles. In such an arrangement the bolt 33 lies between adjacent ends of yoke segments 29 and thus in order to minimise the tendency for the bolt magnetically to link the two yoke segments 29 then the gap between the yoke segments would be increased from, for example, 5mm to 8mm to preserve the magnetic separation of the yoke segments.

In comparative design studies a conventional design of permanent magnet electric motor was compared with a motor constructed in accordance with Figures 1 and 2 as described above and the following observations were made.

| Parameters | Conventional | New Design |
|---|---|---|
| Torque (Ncm) | 45 | 45 |
| Speed at 12 volts (rpm) | 3600 | 3600 |
| Armature Diameter (mm) | 55 | 50 |
| Core Length (mm) | 27.5 | 27.0 |
| Armature Slot Space Factor (%) | 19 | 19 |
| Yoke Diameter (mm) | 76.5 | 70.0 |
| Yoke Length (mm) | 77.5 | 76.5 |
| Overall Length (mm) | 96.8 | 88.5 |
| Active Material Wt (gm) | 1086 | 739 |
| Active Material Cost (p) | 116 | 83 |

It can be seen that the new design reduces the active material weight by 32% and reduces the active material cost by 28%. There is also a significant reduction in size.

If desired the same constructional techniques can be applied to a permanent magnet field motor using other permanent magnet materials, for example Rare Earth-Iron-Boron permanent magnet materials. The use of such materials is particularly helpful in reducing the volume and hence the weight and cost of the permanent magnet material. Comparative design studies of a conventionally constructed motor, and a motor constructed generally in accordance with Figures 1 and 2 and both using Rare Earth-Iron-Boron permanent magnet material for the poles provided the following observations.

| Parameters | Conventional | New Design |
|---|---|---|
| Armature Diameter (mm) | 40 | 45 |
| Core Length (mm) | 30 | 26 |
| Armature Slot Space Factor (%) | 20 | 20 |
| Yoke Diameter (mm) | 60 | 60 |
| Yoke Length (mm) | 68.5 | 67 |
| Overall Length (mm) | 88.5 | 87 |
| Active Material wt (gm) | 598 | 542 |
| Active Material Cost (p) | 519 | 196 |

The references to "active material" relate to the combined cost and combined weight of permanent magnet material, yoke iron, and armature copper and in the observations given above there is a large reduction in active material cost for a relatively small reduction in weight arising from a significant reduction in the most costly component namely permanent magnet material. As can be recognised from the above observations the new design concentrated upon reducing the active material cost and a 62% reduction was effected. The dimensions of the motor remain substantially unchanged, and the weight reduction is 10%. The increase in armature diameter without increase in the yoke diameter is permitted by the radially thinner dimension of the permanent magnet material.

The constructional techniques defined above result in a higher armature flux density both as a result of reduction in the radial air gap between the armature core and the permanent magnet poles, and by virtue of the increase in pole length. The increase in armature flux density permits a reduction in the diameter of the armature for a given torque and speed requirement. In the case of the designs discussed above utilizing ferrite magnets an armature inertia of approximately 30% less than that of the conventional motor construction can be achieved through reduction in armature diameter, thus providing a motor having a faster response characteristic. Such an improved response characteristic is of particular advantage in, for example, an actuator motor. The provision of circumferential air gaps between yoke segments, on the centre line of each pole, provides a reduction in the field generated by armature reaction. This reduction in turn reduces the field in the commutating zone in the interpolar spaces of the motor thus reducing sparking at the brush/commutator interfaces and thus enhancing brush life.

The use of magnetically separate yoke segments rather than a continuous yoke is advantageous also in that circulating flux at high armature currents is minimised thus reducing the possibility of saturation in the armature teeth and the yoke. This effect can be used either to permit the motor to be operated with an enhanced stall torque characteristic, or, in the event that the stall torque is not a critical requirement the yoke and armature teeth dimensions can be reduced thus effecting a reduction in the size, weight, and cost of the motor.

The arrangements shown in Figures 5 to 9 and described in detail below all make use of Rare Earth-Iron or Rare Earth-Iron-Boron magnets, particularly those where the Rare Earth is Neodymium, and embody most of the advantages mentioned above.

The permanent magnet motor shown in Figure 5 is similar in structure to the motor shown in Figures 1 and 2 but uses radially thinner and axially shorter Nd-Fe or Nd-Fe-B magnets 54 in place of the ferrite magnets 24. Parts common to both examples carry the same reference numerals.

Although the basic structure of the motor illustrated in Figure 5 is very similar to that of Figure 2 there are some modifications in the manner in which the magnetic poles and the yoke segments are mounted. The permanent magnet poles 54 are of an axial length which is equal to, or only fractionally larger, than the axial length of the core 14 of the armature 12. The axial ends of the poles 54 are cut away on their inwardly presented faces to define radially inwardly presented shoulders 55 which, at one axial end of the poles, abut a radially outwardly presented surface or register 25 of the bearing housing 22. As with the arrangement illustrated in Figure 2 the register 25 can be a single continuous cylindrical surface, or can be a plurality of separate parts of a cylindrical surface for engagement by the poles 54 respectively. The register or registers 25 are formed very accurately in relation to the axis of the bearing 19 so as to afford an extremely accurate radial positioning of the poles 54 in relation to the axis of the armature 12. In addition to the axially extending register and shoulder surfaces the poles 54 and the end cap 22 have radially extending surfaces which abut to locate the poles 54 axially relative to the bearing housing 22.

In the example illustrated in Figure 2 the poles 24 are axially longer than the poles 54 of the present example, and abut both of the bearing housings 22 and 23 directly. However, in the arrangement illustrated in Figure 5 an accurately formed, non-magnetic spacer sleeve 56 is interposed between the bearing housing 23 and the poles 54 at their axial ends opposite the housing 22. Thus one axial end of the sleeve 56 has registers 26 for accurate location of the axial ends of the poles 54 remote from the housing 22, the sleeve 56 itself being accurately located relative to the axis of the housing 23 and the armature 12 by engagement with registers 57 on the housing 23. Thus in effect the sleeve 56 is simply an extension of the housing 23, and indeed it would be possible, if desired, to manufacture the housing 23 with the sleeve 56 integral therewith. The arrangement is clamped axially by through bolts 33 as described with reference to Figure 2. Similarly, as described with reference to Figure 2 the various components can include locating means for ensuring accurate circumferential positioning of the components relative to one another. The location and securing of the yoke segments 29 in Figure 5 is similar to that described with reference to Figure 2 again noting that the pole segments 29 are located at one end by the sleeve 56. As illustrated the housing 22 and the sleeve 56 can include internally frusto-conical regions 58 coacting with corresponding axially projecting, external frusto-conical portions 59 to provide a more rigid fixing of the pole segments 29 than is afforded by the simple axial clamping action described with reference to Figure 2.

It is to be recognised that if desired the poles 54 and/or the yoke segments 29 could be moulded or cast into non-magnetic, for example zinc alloy or synthetic resin, retaining rings at one or both axial ends, the or each retaining ring then coacting with the registers of the bearing housings 22, 23 to achieve the required accuracy of mounting. However, it is believed that direct mounting of the poles to one part bearing housings affords the possibility of the highest degree of accuracy in the radial positioning of the poles in relation to the axis of rotation of the armature. Thus desirably in the arrangement shown in Figure 5 the sleeve 56 would be integral with the housing 23 and the poles 54 would be formed with the shoulders 55 for engagement with registers 25 and 26 formed directly on the housings 22 and 23.

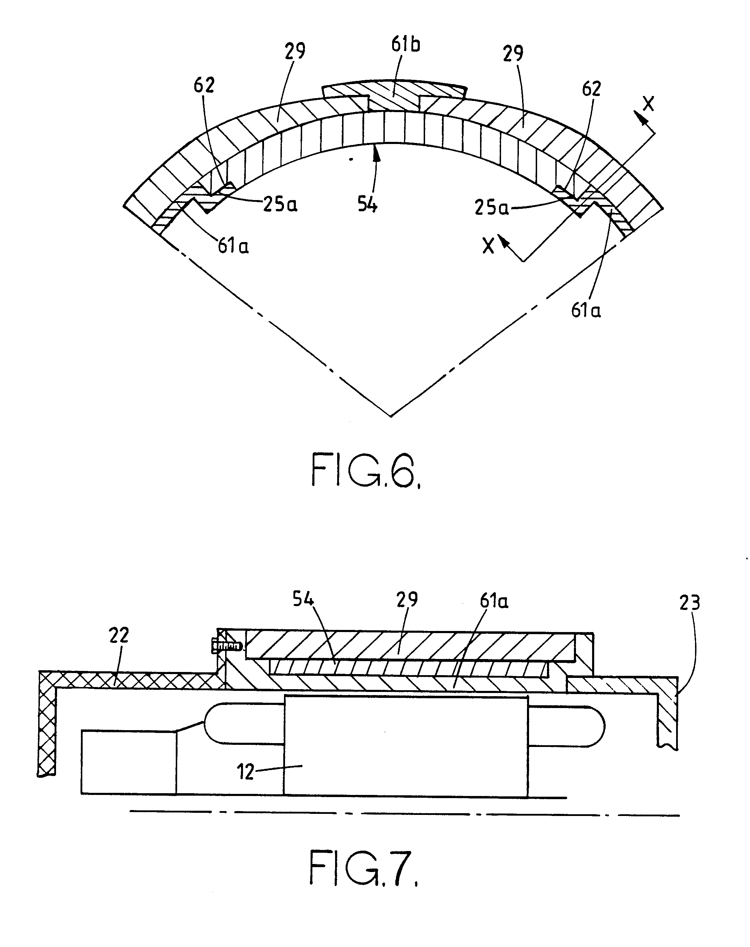

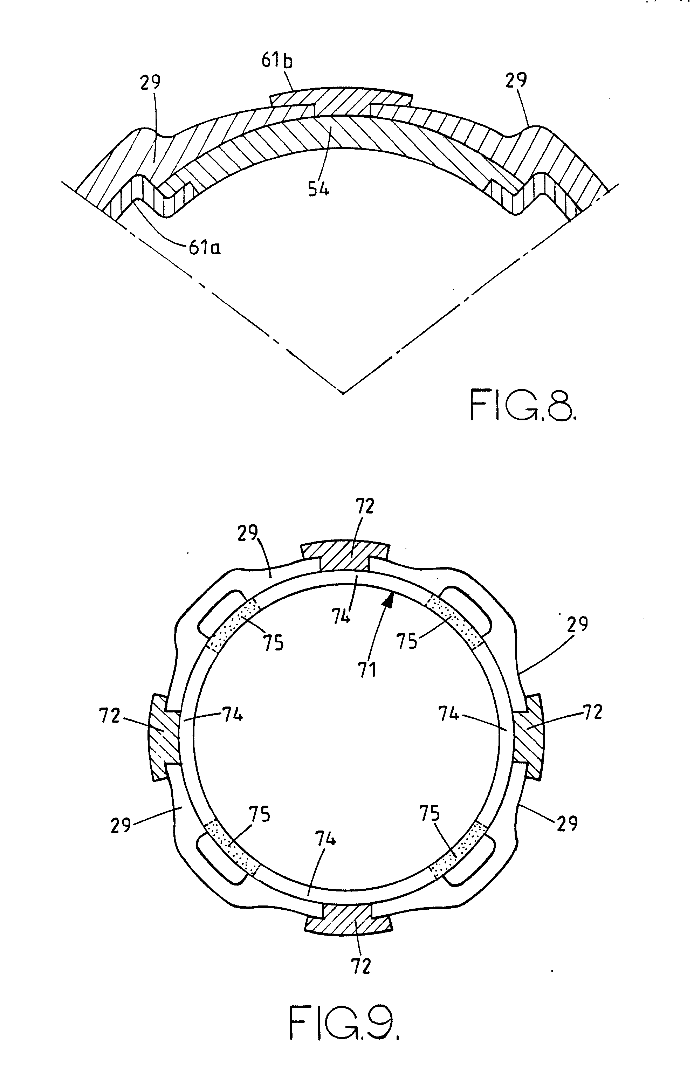

Figure 3 above discloses an arrangement in which the bearing housing 22 includes an integral extension 41 extending through the full length of the motor and abutting the bearing housing 23. It is indicated that the yoke segments and the permanent magnet poles can be incorporated into the extension during the casting or moulding of the extension. Figure 7 illustrates a version of such an arrangement for use with Rare Earth-Iron, or Rare Earth-Iron-Boron permanent magnet poles. In this arrangement the bearing housing 23 is extended by means of an integral extension 61a,61b and the housing 22 is basically in the form of an end cap accurately located coaxial with the housing 23 by being bolted to the extension 61. Figure 6 is a transverse cross-section of the arrangement shown in Figure 7, Figure 7 being a section on the line X-X of Figure 6. It can be seen that the integral extension of the housing 23 comprises internal components 61a and external components 61b both of which extend axially of the machine and are spaced circumferentially from one another. The portions 61a which extend internally lie between circumferentially adjacent poles 54 and provide the accurate circumferential spacing of the poles. Furthermore, the axially extending edge of each portion 61a is stepped to provide a register 62 facing radially outwardly for engagement by a mating shoulder 25a along the respective axial edge of the pole 54. The coaction of the registers 62 and the surfaces 25a provides an accurate radial location of the poles 54 relative to the axis of the armature 12 and of course since the extension 61 is cast with the poles 54 in situ then the register and shoulder arrangement can be continued around the axial ends of the poles to enhance the accuracy of the radial location of the poles. The yoke segments 29 seat against the outer surface of the extension portions 61a, and are spaced circumferentially from one another by the extension portions 61b. As is clear from Figure 6 the extension portions 61b include regions overlying the axially extending edges of the segments 29 to trap the segments 29 in positioned

It will be recognised that as an alternative to casting or moulding the housing 23 and integral extension 61 with the yoke segments 29 and the poles 54 in situ the housing 23 could be formed with a slightly shorter extension, the housing 22 being formed with an end region having the appropriate registers, so that the segments 29 and poles 54 can be slid in place into the extension of the housing 23, and can then be trapped in position axially by engagement of the housing 22 with the free end of the extension of the housing 23.

As mentioned previously the housings 22 and 23, with or without extensions such as 61, can be formed from zinc alloy, or other similar alloys by die-casting or can be formed from synthetic resin materials, filled or unfilled, by injection or compression moulding. It is desirable to step the material radially outwardly (as illustrated in Figure 8) in the interpolar spaces so increasing the magnetic air gap between the ferromagnetic yoke segments 29 and the armature in the interpolar spaces. The provision of the increased air gap in the interpolar spaces improves commutation, and hence minimises brush wear, by reducing armature induced flux in the commutating zones. The increased air gap from armature to conductive material in the interpolar spaces further reduces eddy-current losses.

Figure 9 illustrates an arrangement in which the permanent magnet poles 54 are integral with one another, being defined by circumferentially spaced regions of a single cylindrical sleeve 71 of Rare Earth-Iron, or Rare Earth-Iron-Boron permanent magnet material. Magnetically separate poles can be achieved by ensuring that the material of the sleeve is magnetised only in those regions which are intended to be poles, the regions corresponding to interpolar spaces being free of magnetisation. The axial length of the sleeve will be equal to the required axial length of the poles, and the axial ends of the sleeve will each be cut away internally or otherwise formed to provide a radially inwardly extending shoulder for coaction with corresponding outwardly presented registers on the bearing housings at opposite axial ends of the machine. Naturally if desired the sleeve 71 could be incorporated into a bearing housing extension by moulding or casting the housing and its extension with the sleeve in situ. Such an arrangement is illustrated in Figure 9 where the extension includes regions 72 defining non-magnetic, and preferably non-conductive, spacers between the yoke segments 29. In Figure 9 the regions of the sleeve 71 which are to define the permanent magnet poles, and which are appropriately magnetised, are indicated by the reference numerals 74 and the integral, intervening regions of the sleeve 71 which are not magnetised, and which are to correspond to the interpolar spaces, are shown with dotted shading, and indicated by the reference numerals 75. In order to improve commutation by minimising armature flux in the commutation zones the yoke segments 29 are stepped outwardly where they overlie the interpolar regions 75 of the sleeve 71 to increase the armature to yoke air gap in the interpolar regions. In arrangements utilizing Rare Earth magnets it is preferred, as indicated in Figures 8 and 9 that the armature to yoke material air gap in the interpolar spaces has a radial dimension exceeding the sum of the pole thickness and the armature to pole face air gap.

Although there is an apparent wastage of relatively expensive permanent magnet material by forming the poles 74 as integral parts of a single sleeve, the additional cost may be found to be offset by the simplicity and convenience of manufacturing the poles in this form, particularly in a small diameter motor. It will be recognised that a cylindrical sleeve of permanent magnet material is relatively easy to produce with both an accurately dimensioned internal bore, and accurately positioned register surfaces at its axial ends for engagement with the housing or housings of the motor. The outward spacing of the segments 29 in the interpolar regions additionally minimises the risk of partial magnetisation of the interpolar regions 75 of the sleeve 71 by transient armature currents.

It should be recognised that in all of the embodiments described above using Rare Earth-Iron or Rare Earth-Iron-Boron permanent magnet poles, the poles can be formed by sintering techniques or by moulding techniques. It appears however that it will be preferable to produce the poles by moulding techniques rather than by sintering since such poles would have a lower working flux density, the higher working flux density of sintered poles being generally too high for the type of motor construction contemplated above. Permanent magnets formed by the moulded technique are often referred to as plastic bonded magnets and

8

are produced by injection moulding or compression moulding. Powdered permanent magnet material is bonded together by plastics material and the technique affords the possibility of accurate shaping at relatively low cost. Compression moulding gives better magnetic properties by virtue of a lower percentage of plastic binder than must be used in injection moulding, but injection moulding has a higher productivity. Moreover, the higher plastic content in injection moulded permanent magnets would afford better protection against corrosion of the permanent magnet material. With modern moulding techniques both compression moulding and injection moulding can achieve sufficient levels of accuracy, and it is probable therefore that the use of injection moulding will be preferred except in those situations where the magnetic properties of the moulded pole are critical, in which case it is probable that compression moulded poles would be preferred owing to the higher proportion of permanent magnet material to plastic binder.

It will be recognised that in all of the constructions disclosed above the permanent magnet poles are located accurately by having radially inwardly presented surfaces (shoulders or registers) seated upon radially outwardly presented surfaces of the bearing housings or parts accurately positioned relative thereto. Thus in all cases a high degree of accuracy in the positioning of the poles in relation to the armature axis can be achieved, with consequential reduction in the air gap between the pole face and the armature, thereby providing the possibility of minimising the amount of permanent magnet material employed in the construction of the motor.

It might be thought that the split yoke construction disclosed in British patent 1342728 would provide the benefits mentioned above in relation to the new designs. This however is not the case since although the break in the magnetic circuit of the yoke minimises the demagnetising effect of armature reaction and thus should permit a reduction in the thickness of the permanent magnet poles the result of such a reduction in the construction disclosed in 1342728 is a reduction in the effective flux since the radial air gap between the armature core and the permanent magnet poles cannot be reduced. As described above the constructional techniques illustrated in the accompanying drawings permit a very substantial reduction in the radial air gap between the armature core and the permanent magnet poles, and this in conjunction with the segmental yoke permits the substantial savings mentioned above.

## Claims

1 A permanent magnet field electric motor comprising non-magnetic bearing housing means (22, 23) rotatably supporting an elongate rotor shaft (13) for rotation about its longitudinal axis, a wound armature (14) carried by said rotor shaft (13) for rotation therewith, and a plurality of arcuate permanent magnet poles (24; 54) circumferentially spaced around said armature 14, the motor being characterized in that, said bearing housing means (22, 23) has radially outwardly presented register means (25, 26) engaging radially inwardly presented surfaces of the permanent magnet poles (24; 54) to locate the poles radially relative to the axis of rotation of the armature, said housing means supporting said poles in predetermined circumferential and radial positions relative to said armature, and said housing means further supporting and locating an equal number plurality of yoke segments (29) at the exterior of said poles, said yoke segments (29) respectively magnetically interconnecting circumferentially adjacent poles (24; 54).

2 An electric motor as claimed in claim 1 characterized in that said radial location of said poles by said housing means is effected at least at the axial ends of the poles.

3 An electric motor as claimed in claim 1 or claim 2 characterized in that, the housing means includes axial extension (41; 61) in the interpolar spaces providing circumferential location of the poles (24;54).

4 An electric motor as claimed in claim 3 characterized in that said axial extensions additionally provide radial location.

5 An electric motor as claimed in any one of claims 1 to 4 characterized in that at least part of said housing means is cast or moulded with said poles in situ.

6 An electric motor as claimed in claim 5 characterized in that said at least part of said housing means is cast or moulded also with said yoke segments in situ.

7 An electric motor as claimed in any one of claims 1 to 6 characterized in that said housing means includes two separately formed bearing housings (22, 23) each of which cooperates with a respective axial end of said poles (24; 54) and yoke segments(29).

8 An electric motor as claimed in claim 7 characterized in that said housings each directly engage and radially locate a respective axial end of said poles and yoke segments.

9 An electric motor as claimed in claim 7 characterized in that one of said housings cooperates with the respective axial end of the poles and yoke segments by way of a non-magnetic spacer sleeve (56), the sleeve (56) providing radial location of the end of the poles and yoke segments and being itself radially located by engagement with the respective housing.

10 An electric motor as claimed in any one of claims 1 to 9 characterized in that the permanent magnet material of the poles is a ferrite material.

11 An electric motor as claimed in any one of claims 1 to 9 characterized in that the permanent magnet material of the poles is a Rare Earth-Iron material.

12 An electric motor as claimed in claim 1 characterized in that said poles are Rare Earth-Iron poles and are integral parts of a cylindrical sleeve (71) of Rare Earth-Iron permanent magnet material, the sleeve (71) being magnetised only in those regions (74) which are to define the poles, the intervening regions (75) being left in an unmagnetised state, and the ends of the sleeve each having a radially inwardly presented surface engaged with radially outwardly presented register means on said housing means to locate the poles radially with respect to the armature axis.

13 An electric motor as claimed in claim 11 or claim 12 characterized in that the radial dimension of the air gap between the armature and the yoke material in the interpolar regions exceeds the sum of the armature to pole air gap and the pole thickness.

FIG.1.

FIG. 4.

FIG.2.

FIG.3.

FIG.5.

EP 0 360 546 A2

FIG.6.

FIG.7.

FIG.8.

FIG.9.